(19) Europäisches Patentamt
European Patent Office
Office européen des brevets

(11) EP 4 668 667 A1

(12) **EUROPEAN PATENT APPLICATION**

(43) Date of publication:
**24.12.2025 Bulletin 2025/52**

(21) Application number: **25175947.8**

(22) Date of filing: **13.05.2025**

(51) International Patent Classification (IPC):
*H04L 9/00* *(2022.01)* *H04L 9/06* *(2006.01)*

(52) Cooperative Patent Classification (CPC):
**H04L 9/003; H04L 9/0631;** H04L 2209/046;
H04L 2209/122; H04L 2209/125

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.06.2024 KR 20240080208**

(71) Applicant: **Samsung Electronics Co., Ltd.
Suwon-si, Gyeonggi-do 16677 (KR)**

(72) Inventor: **LEE, Wijik
16677 Suwon-si, Gyeonggi-do (KR)**

(74) Representative: **Kuhnen & Wacker
Patent- und Rechtsanwaltsbüro PartG mbB
Prinz-Ludwig-Straße 40A
85354 Freising (DE)**

(54) **ENCRYPTION DEVICE, OPERATING METHOD OF ENCRYPTION DEVICE, AND STORAGE DEVICE INCLUDING ENCRYPTION DEVICE**

(57) An encryption device (10) for performing a cryptographic operation on input data to generate output data, including: a substitution cluster circuit configured to perform a substitution operation on the input data, wherein the substitution cluster circuit includes first substitution circuits (S1) and second substitution circuits (S2); a shift-row and mix-column circuit configured to: receive a first substitution data set from the first substitution circuits (S1), receive a second substitution data set from the second substitution circuits (S2), and perform a shift-row operation and a mix-column operation on the first substitution data set and the second substitution data set to generate mixed data; and a round key addition circuit configured to perform a key addition operation on the mixed data to generate the output data, wherein an execution time of each first substitution circuit (S1) is shorter than an execution time of each second substitution circuit (S2).

FIG. 3

**Description**

BACKGROUND

1. Field

The disclosure relates to semiconductor memory, and more particularly, to an encryption device, an operating method of the encryption device, and a storage device including the encryption device.

2. Description of Related Art

Semiconductor memory may be classified into volatile memory devices, such as static random access memory (SRAM) and dynamic random access memory (DRAM), which lose stored data when power thereto is terminated or cut off, and nonvolatile memory devices, such as flash memory devices, phase-change random access memory (PRAM), magnetoresistive random access memory (MRAM), resistive random access memory (RRAM), ferroelectric random access memory (FRAM), etc., which retain stored data even when power thereto is cut off.

Personalized electronic devices may include secure information about a user. To prevent security information from being leaked through hacking, a hardware encryption/decryption device may be used to convert security information transmitted using a signing or authentication process into encrypted text and transmit the same.

Encryption technology may be used to ensure the safety of data transmission. In encryption technology, a transmission side may encrypt plaintext and a receiving side may decrypt ciphertext. This encryption of plaintext and decryption of ciphertext may be referred to as cryptography.

Because cryptographic operations may be generally slow, they are often implemented in hardware for use in devices, such as smart cards. Block cipher algorithms may include data encryption standard (DES), advanced encryption standard (AES), SEED, ARIA, and SM4.

SUMMARY

Provided is an encryption device that consumes reduced power without increasing execution time, an operating method of the encryption device, and a storage device including the encryption device.

Additional aspects will be set forth in part in the description which follows and, in part, will be apparent from the description, or may be learned by practice of the presented embodiments.

In accordance with an aspect of the disclosure, an encryption device for performing a cryptographic operation on input data to generate output data includes: a substitution cluster circuit configured to perform a substitution operation on the input data, wherein the substitution cluster circuit includes a plurality of first substitution circuits and a plurality of second substitution circuits; a shift-row and mix-column circuit configured to: receive a first substitution data set from the plurality of first substitution circuits, receive a second substitution data set from the plurality of second substitution circuits, and perform a shift-row operation and a mix-column operation on the first substitution data set and the second substitution data set to generate mixed data; and a round key addition circuit configured to perform a key addition operation on the mixed data to generate the output data, wherein an execution time of each first substitution circuit of the plurality of first substitution circuits is shorter than an execution time of each second substitution circuit of the plurality of second substitution circuits, and wherein the shift-row and mix-column circuit includes: a first arithmetic circuit configured to perform a first arithmetic operation on the first substitution data set to generate a first intermediate data set; and a second arithmetic circuit configured to perform a second arithmetic operation on the first intermediate data set and the second substitution data set to generate the mixed data.

In accordance with an aspect of the disclosure, a storage device includes: a nonvolatile memory device; and a storage controller including an encryption device configured to: control the nonvolatile memory device, perform an encryption operation on input data received from an external host device, generate output data, and transmit the output data to the nonvolatile memory device, wherein the encryption device includes: a substitution cluster circuit configured to perform a substitution operation on the input data, wherein the substitution cluster circuit includes a plurality of first substitution circuits and a plurality of second substitution circuits; a shift-row and mix-column circuit configured to receive a first substitution data set from the plurality of first substitution circuits, receive a second substitution data set from the plurality of second substitution circuits, and perform a shift-row operation and a mix-column operation on the first substitution data set and the second substitution data set to generate mixed data; and a round key addition circuit configured to perform a key addition operation on the mixed data to generate output data, and wherein the shift-row and mix-column circuit includes: a first arithmetic circuit configured to perform a first arithmetic operation on the first substitution data set to generate a first intermediate data set; and a second arithmetic circuit configured to perform a second arithmetic operation on the first intermediate data set and the second substitution data set to generate mixed data.

In accordance with an aspect of the disclosure, an operating method of an encryption device for performing an encryption operation on input data to generate output data includes: performing, by a plurality of first substitution circuits and a plurality of second substitution circuits, a substitution operation on the input data; receiving, by a shift-row and mix-column circuit, a first substitution data set from the plurality of first substitution circuits; performing, by the shift-row and mix-column circuit, a first arithmetic operation based on the first substitution data set; receiving, by the shift-row and mix-column circuit, a second substitution data set from the plurality of second substitution circuits; performing, by the shift-row and mix-column circuit, a second arithmetic operation based on a first intermediate data set, wherein the first intermediate data set is a result of the first arithmetic operation and the second substitution data set; and performing, by a round key addition circuit, a round key addition operation on mixed data to generate the output data, wherein the mixed data is a result of the second arithmetic operation.

BRIEF DESCRIPTION OF DRAWINGS

The above and other aspects, features, and advantages of certain embodiments of the present disclosure will be more apparent from the following description taken in conjunction with the accompanying drawings in which:

FIG. 1 is a block diagram illustrating an encryption device according to an embodiment;

FIG. 2 is a block diagram illustrating the encryption core of FIG. 1 in detail, according to an embodiment;

FIG. 3 is a block diagram illustrating a substitution cluster circuit of FIG. 2 in detail, according to an embodiment;

FIG. 4 is a block diagram illustrating a shift-row and mix-column circuit of FIG. 2 in detail, according to an embodiment;

FIG. 5 is a block diagram illustrating the shift-row and mix-column circuit of FIG. 2 in detail, according to an embodiment;

FIG. 6 is a timing diagram illustrating an operation of the shift-row and mix-column circuit of FIG. 2, according to an embodiment;

FIG. 7 is a flowchart illustrating an operating method of an encryption device according to an embodiment;

FIG. 8 is a flowchart illustrating operation S130 of FIG. 7 in detail, according to an embodiment;

FIG. 9 is a timing diagram illustrating an operation of a shift-row and mix-column circuit, according to an embodiment;

FIG. 10 is a timing diagram illustrating an operation of the shift-row and mix-column circuit of FIG. 2, according to an embodiment;

FIGS. 11A and 11B are block diagrams illustrating the substitution cluster circuit of FIG. 2 in detail, according to an embodiment;

FIG. 12 is a block diagram illustrating the shift-row and mix-column circuit of FIG. 2 in detail, according to an embodiment;

FIG. 13 is a timing diagram illustrating an operation of the shift-row and mix-column circuit of FIG. 2, according to an embodiment;

FIG. 14 is a block diagram illustrating a storage system according to an embodiment; and

FIG. 15 is a diagram illustrating a system to which a memory device is applied, according to an embodiment.

DETAILED DESCRIPTION

Hereinafter, embodiments are described clearly and in detail to such an extent that a person skilled in the art may more easily practice the disclosure.

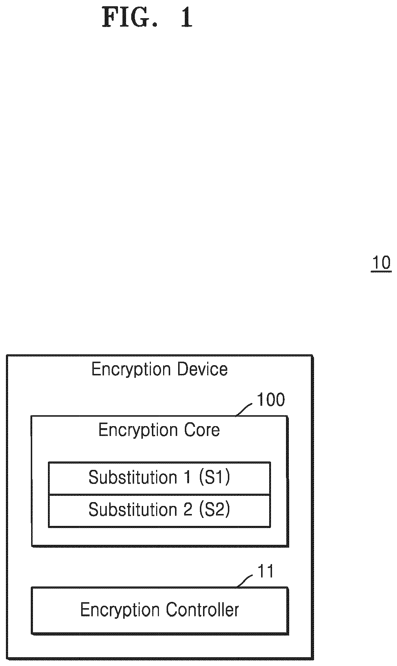

FIG. 1 is a block diagram illustrating an encryption device 10 according to an embodiment.
Referring to FIG. 1, the encryption device 10 according to an embodiment may include an encryption core 100 and an encryption controller 11.

The encryption core 100 may perform an encryption operation on input data to generate output data. The encryption core 100 may include various types of arithmetic circuits. For example, the encryption core 100 may include at least one from among a substitution circuit, a shift-row and mix-column circuit, a round key addition arithmetic circuit, etc. The encryption core 100 may perform an operation using various types of arithmetic circuits based on a control signal received from the encryption controller 11, thereby performing an encryption operation on input data and generating output data.

The encryption core 100 may perform a plurality of round operations on input data to generate output data. The round operations may include a first round operation, a preset or predetermined number of repeated round operations, and a final round operation.

In an embodiment, the first round operation may include a round key addition operation using a round key addition arithmetic circuit. The first round operation may be performed as a first stage of encryption on the input data. After the first round operation is performed, repeated round operations may be performed.

In an embodiment, the repeated round operations may include a substitution operation using a substitution circuit, a shift-row operation using a shift-row and mix-column circuit, a mix-column operation, and a round key addition operation using a round key addition arithmetic circuit. The repeated round operations may be performed subsequent to the first round operation and may be performed a preset or predetermined number of times. After the repeated round operations are performed a reference number of times, the final round operation may be performed.

In an embodiment, the final round operation may include a substitution operation using a substitution circuit, a shift-row operation using a shift-row and mix-column circuit, and a round key addition operation using a round key addition arithmetic circuit. By performing the final round operation, final output data with the input data encrypted may be generated.

The encryption controller 11 may control the overall operation of the encryption device 10. The encryption controller 11 may control the operation of the encryption core 100 by transmitting a control signal to the encryption core 100. The encryption controller 11 may control the encryption core 100 to sequentially perform the first round operation, a preset or predetermined number of repeated round operations, and the final round operation.

The encryption device 10 may perform an encryption operation to generate output data. The encryption device 10 may perform encryption operations including a substitution operation, a shift row operation, and a mix column operation. A detailed description of examples of the cryptographic operations is given with reference to the drawings below. A substitution cluster circuit of the encryption device 10 may include a plurality of types of substitution circuits. In an embodiment, the encryption device 10 may include a first substitution circuit S1 and a second substitution circuit S2. The first substitution circuit S1 may refer to a first type substitution circuit, and the second substitution circuit S2 may refer to a second type substitution circuit. The encryption device 10 may perform encryption operations by using substitution circuits having different performance characteristics. Accordingly, gate counting and power consumption may be reduced.

In an embodiment, the encryption device 10 may perform improved shift-row operations and column mix operations. A detailed description examples of the shift row operation and column mix operation is given with reference to the drawings below. The encryption device 10 may first perform a first arithmetic operation on data output from the first substitution circuit S1. The encryption device 10 may perform the first arithmetic operation while the second substitution circuit S2 performs a substitution operation (e.g., the first arithmetic operation may be performed simultaneously with the substitution operation). The encryption device 10 may perform a second arithmetic operation after the substitution operation of the second substitution circuit S2 is completed.

The encryption device 10 according to an embodiment may perform a shift row operation and a column mix operation based on data already output from the first substitution circuit S1 before the second substitution circuit S2 completes the substitution operation. Accordingly, the execution time of the encryption device 10 may be reduced. Examples of the configuration and operation of the encryption core 100 are described in detail with reference to the drawings below.

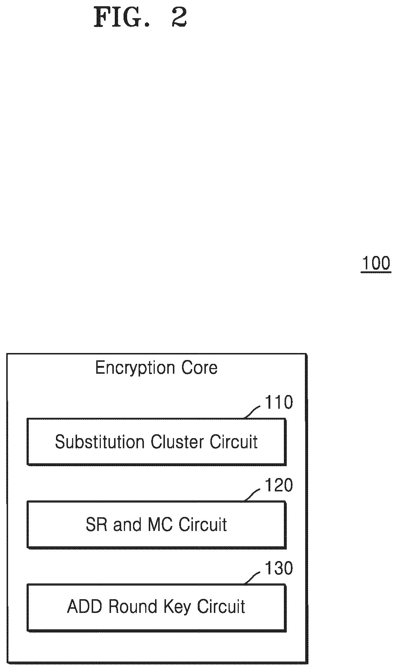

FIG. 2 is a block diagram illustrating the encryption core 100 of FIG. 1 in detail.

Referring to FIG. 2, the encryption core 100 according to an embodiment may include a substitution cluster circuit 110, a shift-row and mix-column circuit (illustrated as "SR and MC circuit") 120, and a round key addition arithmetic circuit 130 (illustrated as "ADD Round Key Circuit").

The substitution cluster circuit 110 may include a plurality of substitution circuits. Each of the substitution circuits may perform a substitution operation. The substitution operation may be or may include an operation of performing a nonlinear substitution on input data to generate substitution data. In an embodiment, the substitution circuit may substitute data using a look-up table. For example, the substitution cluster circuit 110 may convert each byte into another byte that may be inverted using the look-up table (e.g., an S-Box). The substitution cluster circuit 110 may perform a substitution operation on input data to generate substitution data. The substitution cluster circuit 110 may output substitution data to the SR and MC circuit 120. Examples of a detailed structure and operation of the substitution cluster circuit 110 are described below with reference to the drawings below.

The SR and MC circuit 120 may perform a shift-row operation on input data. The SR and MC circuit 120 may perform a shift row operation on input data by cyclically shifting rows of the input data.

The shift-row operation may be expressed as shown in Equation 1 below.

$$\text{Equation 1}$$

$$\begin{bmatrix} x_1 & x_2 & x_3 & x_4 \\ x_5 & x_6 & x_7 & x_8 \\ x_9 & x_{10} & x_{11} & x_{12} \\ x_{13} & x_{14} & x_{15} & x_{16} \end{bmatrix} \rightarrow \begin{bmatrix} x_1 & x_2 & x_3 & x_4 \\ x_6 & x_7 & x_8 & x_5 \\ x_{11} & x_{12} & x_9 & x_{10} \\ x_{16} & x_{13} & x_{14} & x_{15} \end{bmatrix}$$

Shift data may be generated as a result of performing the shift row operation on the input data. The SR and MC circuit 120 may perform a mix column operation on the shift data generated by the SR and MC circuit 120. Here, the mix column operation may be or may include a matrix multiplication operation between the shift data and a predefined mix column matrix. For example, for simplicity of description, the mix column operation between a data matrix and a mix column matrix expressed as a 4*4 matrix may be expressed as shown in Equation 2 below.

$$\text{Equation 2}$$

$$\text{M} \cdot \text{D} = \begin{bmatrix} 2 & 3 & 1 & 1 \\ 1 & 2 & 3 & 1 \\ 1 & 1 & 2 & 3 \\ 3 & 1 & 1 & 2 \end{bmatrix} \cdot \begin{bmatrix} x_1 & x_2 & x_3 & x_4 \\ x_6 & x_7 & x_8 & x_5 \\ x_{11} & x_{12} & x_9 & x_{10} \\ x_{16} & x_{13} & x_{14} & x_{15} \end{bmatrix} = R$$

In Equation 2, matrix D may be a data matrix, matrix M may be a mix column matrix, and matrix R may be a mix column operation result matrix. Each element of the mix column operation result matrix R may be expressed as the product and sum of elements of the data matrix D and the mix column matrix M.

Mixed data generated by the SR and MC circuit 120 may be input to the round key addition arithmetic circuit 130 under the control by the encryption controller 11. Examples of a detailed structure and operation of the SR and MC circuit 120 are described below with reference to the drawings below.

The round key addition arithmetic circuit 130 may perform a round key addition operation on the mixed data. The round key addition arithmetic circuit 130 may perform a round key addition operation by performing a bit-wise combinational logic operation (e.g., an exclusive OR (XOR) operation) between the mixed data and a round key.

The round key addition arithmetic circuit 130 may generate output data as a result of performing the round key addition operation on the mixed data. The output data generated by the round key addition arithmetic circuit 130 may be used for the next round operation under control by the encryption controller 11. For example, if the output data generated by the round key addition arithmetic circuit 130 is generated in the first round operation or the repeated round operation, the output data may be used in the repeated round operation or the final round operation performed next.

In the final round, the SR and MC circuit 120 may perform only the shift-row operation and not the mix-column operation. In the final round, the SR and MC circuit 120 may output shift data to the round key addition arithmetic circuit 130. The output data generated by performing the round key addition operation on the shift data by the round key addition arithmetic circuit 130 may be used as final output data. For example, if the output data generated by the round key addition arithmetic circuit 130 is generated in the final round operation, the output data may be used as the final output data in which the input data is encrypted.

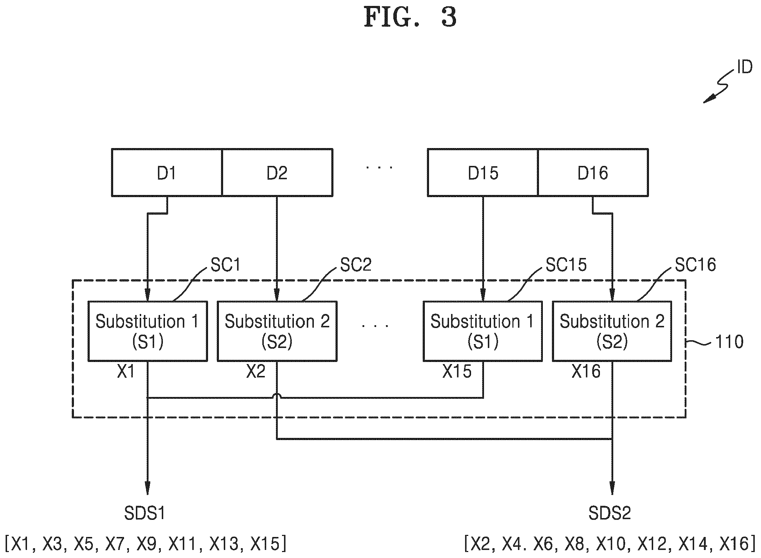

FIG. 3 is a block diagram illustrating the substitution cluster circuit 110 of FIG. 2 in detail.

Referring to FIGS. 2 and 3, the substitution cluster circuit 110 may include a plurality of sub-circuits, for example first sub-circuit SC1, second sub-circuit SC2, third sub-circuit SC3, fourth sub-circuit SC4, fifth sub-circuit SC5, sixth sub-circuit SC6, seventh sub-circuit SC7, eighth sub-circuit SC8, ninth sub-circuit SC9, tenth sub-circuit SC10, eleventh sub-circuit SC11, twelfth sub-circuit SC12, thirteenth sub-circuit SC13, fourteenth sub-circuit SC14, fifteenth sub-circuit SC15, and sixteenth sub-circuit SC16. The substitution cluster circuit 110 may include a plurality of types of substitution circuits. The substitution circuit may be implemented in a look-up table manner. In an embodiment, the substitution cluster circuit 110 may include one or more first substitution circuits S1 and one or more second substitution circuits S2. The first substitution circuits S1 may be different from the second substitution circuits S2. For example, the first substitution circuits S1 may refer to a first type substitution circuit, and the second substitution circuits S2 may refer to a second type substitution circuit.

The substitution cluster circuit 110 may include a plurality of first substitution circuits S1 and a plurality of second substitution circuits S2. For example, each of the first, third, fifth, seventh, ninth, eleventh, thirteenth, and fifteenth sub-circuits SC1, SC3, SC5, SC7, SC9, SC11, SC13, and SC15 may be a first substitution circuit S1 (e.g., a first type substitution circuit). Each of the second, fourth, sixth, eighth, tenth, twelfth, fourteenth, and sixteenth sub-circuits SC2, SC4, SC6, SC8, SC10, SC12, SC14, and SC16 may be a second substitution circuit S2 (e.g., a second type substitution circuit). In the substitution cluster circuit 110, the first substitution circuit S1 and the second substitution circuit S2 may be arranged alternatingly (e.g., S1→S2→S1→S2). However, embodiments are not limited thereto, and the number of first substitution circuits S1 and the number of second substitution circuits S2 may increase or decrease depending on the implementation, and the arrangement of the first substitution circuits S1 and the second substitution circuits S2 may also be combined to vary depending on the implementation.

The input data ID may include first to sixteenth sub-data, for example first sub-data D1, second sub-data D2, third sub-data D3, fourth sub-data D4, fifth sub-data D5, sixth sub-data D6, seventh sub-data D7, eighth sub-data D8, ninth sub-data D9, tenth sub-data D10, eleventh sub-data D11, twelfth sub-data D12, thirteenth sub-data D13, fourteenth sub-data D14, fifteenth sub-data D15, and sixteenth sub-data D16. The number of pieces of sub-data included in the input data ID may be equal to the number of sub-circuits SC1 to SC16. The input data ID may be divided into a plurality of pieces of sub-data having the same size.

The first sub-circuit SC1, which may be a first substitution circuit S1, may receive the first sub-data D1. The first sub-circuit SC1 may perform a substitution operation on the first sub-data D1 to generate first substitution data X1. The first sub-circuit SC1 may output the first substitution data X1. The sub-circuits SC3, SC5, SC7, SC9, SC11, SC13, and SC15, which may also be first substitution circuits S1, may operate in a same or similar manner, so a detailed description thereof is omitted.

The second sub-circuit SC2, which may be a second substitution circuit S2, may receive second sub-data SD2. The second sub-circuit SC2 may perform a substitution operation on the second sub-data DS2 to generate second substitution data X2. The second sub-circuit SC2 may output the second substitution data X2. The sub-circuits SC4, SC6, SC8, SC10, SC12, SC14, and SC16, which may also be second substitution circuits S2 may operate in a same or similar manner, so a detailed description thereof is omitted.

A first substitution data set SDS1 may include data output from the first substitution circuit S1. A second substitution data set SDS2 may include data output from the second substitution circuit S2. The substitution cluster circuit 110 may provide the first substitution data set SDS1 and the second substitution data set SDS2 to the SR and MC circuit 120. The first substitution data set SDS1 may include the first substitution data X1, and also third substitution data X3, fifth substitution data X5, seventh substitution data X7, ninth substitution data X9, eleventh substitution data X11, thirteenth substitution data X13, and fifteenth substitution data X15. The second substitution data set SDS2 may include the second substation data X2, and also fourth substitution data X4, sixth substitution data X6, eighth substitution data X8, tenth substitution data X10, twelfth substitution data X12, fourteenth substitution data X14, and sixteenth substitution data X16.

The performance (e.g., performance characteristics) of the first substitution circuit S1 may be different from the performance (e.g., performance characteristics) of the second substitution circuit S2. A gate count of the first substitution circuit S1 may be greater than a gate count of the second substitution circuit S2. The execution time of the first substitution circuit S1 may be shorter than an execution time of the second substitution circuit S2. For example, a propagation delay of the first substitution circuit S1 may be shorter than a propagation delay time of the second substitution circuit S2. Power consumption of the first substitution circuit S1 may be greater than power consumption of the second substitution circuit S2.

The substitution cluster circuit 110 may mix and use different types (or different kinds) of substitution circuits, thereby reducing the gate count and power consumption. If the substitution cluster circuit 110 includes only the first substitution circuits S1, the propagation delay may decrease, but the gate count may increase and power consumption may increase. If the substitution cluster circuit 110 includes only the second substitution circuits S2, the gate count may decrease and power consumption may decrease, but the propagation delay may increase. However, this is only an example, and embodiments are not limited thereto.

The encryption device 10 according to an embodiment may offset the effect of increasing the gate count by using both the first substitution circuit S1 and the second substitution circuit S2. For example, the encryption device 10 may optimize the propagation delay, gate count, and power consumption by using a plurality of types of substitution circuits.

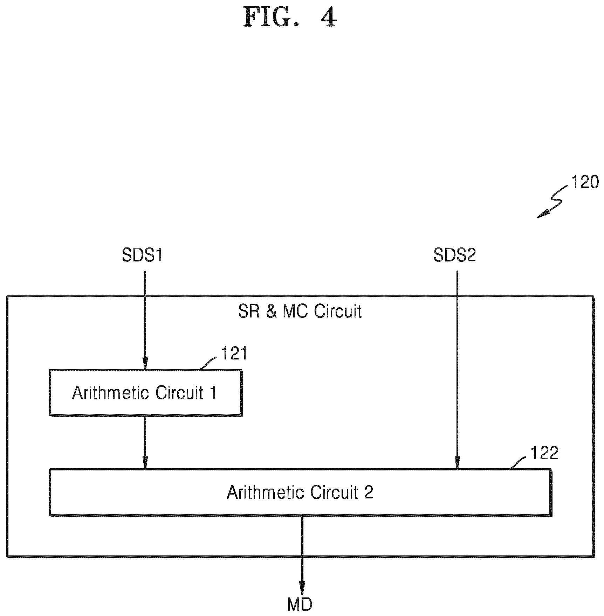

FIG. 4 is a block diagram illustrating the SR and MC circuit 120 of FIG. 2 in detail.

Referring to FIGS. 2 and 4, the SR and MC circuit 120 may include a first arithmetic circuit 121 and a second arithmetic circuit 122. The SR and MC circuit 120 may receive the first substitution data set SDS1 and the second substitution data set SDS2. The SR and MC circuit 120 may perform a shift row operation and a mix column operation to generate mixed data MD. The SR and MC circuit 120 may output the mixed data MD.

The first arithmetic circuit 121 may receive the first substitution data set SDS1. The first arithmetic circuit 121 may perform an arithmetic operation based on the first substitution data set SDS1 to generate a first intermediate data set IMD1. The first arithmetic circuit 121 may output the first intermediate data set IMD1 to the second arithmetic circuit 122.

The second arithmetic circuit 122 may receive a first intermediate data set IMD1 and a second substitution data set SDS2. The second arithmetic circuit 122 may perform an arithmetic operation based on the first intermediate data set IMD1 and the second substitution data set SDS2 to generate mixed data MD. The second arithmetic circuit 122 may output the mixed data MD.

An execution time of the first substitution circuit S1 may be shorter than an execution time of the second substitution circuit S2. Before the second substitution circuit S2 outputs the substitution data, the first substitution circuit S1 may output the substitution data. Before the substitution cluster circuit 110 outputs the second substitution data set SDS2, the substitution cluster circuit 110 may first output the first substitution data set SDS1. Because the first substitution circuit S1 may have a larger gate count than the second substitution circuit S2, the propagation delay of the first substitution circuit S1 may be shorter than the propagation delay of the second substitution circuit S2. For example, the first substitution circuit S1 may process data in parallel using many gates, thereby performing a substitution operation faster than the second substitution circuit S2.

A timing at which the substitution cluster circuit 110 provides the first substitution data set SDS1 to the SR and MC circuit 120 may be different from a timing at which the substitution cluster circuit 110 provides the second substitution data set SDS2 to the SR and MC circuit 120. The substitution cluster circuit 110 may first output the generated first substitution data set SDS1 to the SR and MC circuit 120. The substitution cluster circuit 110 may provide the first substitution data set SDS1 generated first to the SR and MC circuit 120, without waiting until the second substitution circuits S2 output the substitution data (e.g., the substitution data included in the second substitution data set SDS2). While the second substitution circuit S2 performs the substitution operation, the first substitution circuit S1 may output the substitution data to the SR and MC circuit 120.

Accordingly, the substitution cluster circuit 110 may first provide the first substitution data set SDS1 to the SR and MC circuit 120. Thereafter, the substitution cluster circuit 110 may provide the second substitution data set SDS2 to the SR and MC circuit 120.

While the second substitution circuit S2 performs a substitution operation or transmits the substitution data to the SR and MC circuit 120, the first arithmetic circuit 121 may perform a first arithmetic operation based on the first substitution data set SDS1. Thereafter, the second arithmetic circuit 122 may perform a second arithmetic operation based on the first intermediate data set IMD1 received from the first arithmetic circuit 121 and the second substitution data set SDS2. The SR and MC circuit 120 may divide the shift-row operation and mix-column operation into a first arithmetic operation and a second arithmetic operation. The SR and MC circuit 120 may perform the first arithmetic operation and then perform the second arithmetic operation. The SR and MC circuit 120 may reduce the propagation delay by performing the first arithmetic operation before the second arithmetic operation.

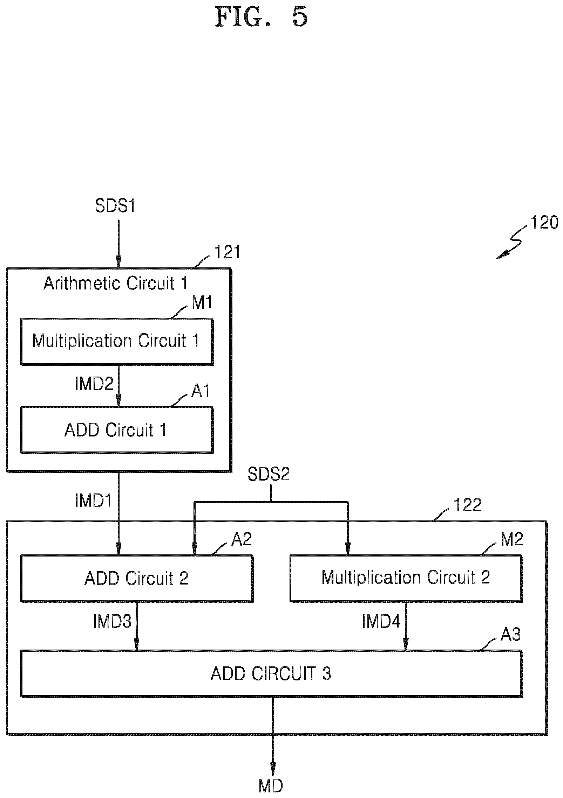

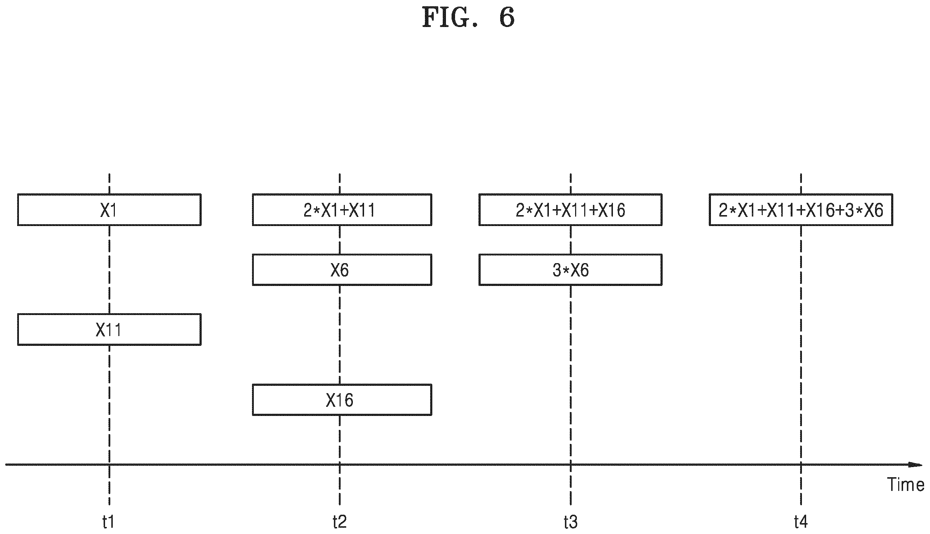

FIG. 5 is a block diagram illustrating the SR and MC circuit 120 of FIG. 2 in detail. FIG. 6 is a timing diagram illustrating the operation of the SR and MC circuit 120 of FIG. 2.

Referring to FIGS. 2, 4, 5, and 6, the SR and MC circuit 120 may include the first arithmetic circuit 121 and the second arithmetic circuit 122.

In an embodiment, the first arithmetic circuit 121 may include a first multiplication circuit M1 and a first addition circuit A1. The first multiplication circuit M1 may receive the first substitution data set SDS1. The first multiplication circuit M1 may perform a multiplication operation (or a matrix multiplication operation) based on the first substitution data set SDS1. For example, the first multiplication circuit M1 may perform a multiplication operation on some substitution data included in the first substitution data set SDS1 to generate the second intermediate data set IMD2. The first multiplication circuit M1 may output the second intermediate data set IMD2 to the first addition circuit A1.

For example, referring to Equation 2, first mixed sub-data MSD1, which may be a value of a first row and a first column of the matrix R, may be expressed as shown in Equation 3. The first mixed sub-data MSD1 may be calculated by adding the products of elements corresponding to the first row of matrix M and the first column of matrix D.

Equation 3

$$MSD1 = 2 * x_1 + 3 * x_6 + x_{11} + x_{16}$$

The first column of the matrix D may include the first substitution data X1, the sixth substitution data X6, the eleventh substitution data X11, and the sixteenth substitution data X16. Referring to FIG. 3, the first sub-circuit SC1 may output the first substitution data X1, the sixth sub-circuit SC6 may output the sixth substitution data X6, the eleventh sub-circuit SC11 may output the eleventh substitution data X11, and the sixteenth sub-circuit SC16 may output the sixteenth substitution data X16. The first substitution data X1 and the eleventh substitution data X11 may be output from the first substitution circuits S1. The sixth substitution data X6 and the sixteenth substitution data X16 may be output from the second substitution circuits S2. For example, the first substitution data X1 and the eleventh substitution data X11 may be included in the first substitution data set SDS1, and the sixth substitution data X6 and the sixteenth substitution data X16 may be included in the second substitution data set SDS2.

At the first time point t1 shown in FIG. 6, the first arithmetic circuit 121 may receive the first substitution data set SDS1. The first arithmetic circuit 121 may receive the first substitution data X1 and the eleventh substitution data X11. The first multiplication circuit M1 may perform a multiplication operation on the first substitution data X1 of the first substitution data set SDS1. The first multiplication circuit M1 may perform a multiplication operation on the first substitution data X1 and a value '2' of the corresponding element of the matrix M to generate a first result value R1 (e.g. $2 * x_1$). The first multiplication circuit M1 may provide the second intermediate data set IMD2 including the first result value R1 (e.g. $2 * x_1$) to the first addition circuit A1.

The first addition circuit A1 may perform an addition operation (or a combinational logic operation (e.g., an XOR operation)) based on the second intermediate data set IMD2 and the first substitution data set SDS1. The first addition circuit A1 may perform an addition operation based on the second intermediate data set IMD2 and the first substitution data set SDS1 to generate the first intermediate data set IMD1. The first addition circuit A1 may output the first intermediate data set IMD1 to the second arithmetic circuit 122.

For example, the first addition circuit A1 may perform an addition operation on the first result value R1 (e.g. $2 * x_1$) of the second intermediate data set IMD2 and the eleventh substitution data X11 of the first substitution data set SDS1 to calculate the first mixed sub-data MSD1. The first addition circuit A1 may perform an addition operation to generate a second result value R2 (e.g., $2 * x_1 + x_{11}$). The first addition circuit A1 may provide the first intermediate data set IMD1 including the second result value R2 (e.g., $2 * x_1 + x_{11}$) to the second arithmetic circuit 122.

The second arithmetic circuit 122 may receive the first intermediate data set IMD1 and the second substitution data set SDS2. For example, at the second time point t2, the second arithmetic circuit 122 may receive the second result value R2 (e.g., $2 * x_1 + x_{11}$), the sixth substitution data X6, and the sixteenth substitution data X16.

The second arithmetic circuit 122 may include a second addition circuit A2, a second multiplication circuit M2, and a third addition circuit A3. The second addition circuit A2 may receive the first intermediate data set IMD1 and the second substitution data set SDS2. The second addition circuit A2 may perform an addition operation based on the first intermediate data set IMD1 and the second substitution data set SDS2. The second addition circuit A2 may perform an addition operation to generate a third intermediate data set IMD3. The second addition circuit A2 may output the third intermediate data set IMD3 to the third addition circuit A3.

The second multiplication circuit M2 may receive the second substitution data set SDS2. The second multiplication circuit M2 may perform a multiplication operation based on the second substitution data set SDS2. For example, the second multiplication circuit M2 may perform a multiplication operation on some pieces of substitution data included in the second substitution data set SDS2 to generate a fourth intermediate data set IMD4. The second multiplication circuit M2 may output the fourth intermediate data set IMD4 to the third addition circuit A3.

For example, the second addition circuit A2 may perform an addition operation on the second result value R2 (e.g., $2 * x_1 + x_{11}$) of the first intermediate data set IMD1 and the sixteenth substitution data X16 of the second substitution data set SDS2 to calculate the first mixed sub-data MSD1. The second addition circuit A2 may perform an addition operation to generate a third result value R3 (e.g., $2 * x_1 + x_{11} + x_{16}$). The second addition circuit A2 may provide the third intermediate data set IMD3 including the third result value R3 (e.g., $2 * x_1 + x_{11} + x_{16}$) to the third addition circuit A3.

The second multiplication circuit M2 may perform a multiplication operation on the sixth substitution data X6 of the second substitution data set SDS2. The second multiplication circuit M2 may perform a multiplication operation on the sixth substitution data X6 and a value '3' of the corresponding element of the matrix M to generate a fourth result value R4 (e.g., $3 * x_6$). The second multiplication circuit M2 may provide the fourth intermediate data set IMD4 including the fourth result value R4 to the third addition circuit A3.

The third addition circuit A3 may receive the third intermediate data set IMD3 and the fourth intermediate data set IMD4. For example, at the third time point t3, the third addition circuit A3 may receive the third result value R3 (e.g., $2 * x_1 + x_{11} + x_{16}$), and the fourth result value R4 (e.g., $3 * x_6$). The third addition circuit A3 may perform an addition operation based on the third intermediate data set IMD3 and the fourth intermediate data set IMD4. The third addition circuit A3 may perform an addition operation to generate mixed data MD. The third addition circuit A3 may output the mixed data MD.

For example, the third addition circuit A3 may perform an addition operation on the third result value R3 (e.g., $2 * x_1 + x_{11} + x_{16}$), ) of the third intermediate data set IMD3 and the fourth result value R4 (e.g., $3 * x_6$) of the fourth intermediate data set IMD4 to calculate the first mixed sub-data MSD1. The third addition circuit A3 may perform an addition operation to generate the first mixed sub-data MSD1 (e.g., $2 * x_1 + 3 * x_6 + x_{11} + x_{16}$). The third addition circuit A3 may output the mixed data MD including the first mixed sub-data MSD1 (e.g., $2 * x_1 + 3 * x_6 + x_{11} + x_{16}$). For example, at a fourth time point t4, the third addition circuit A3 may output the first mixed sub-data MSD1 (e.g., $2 * x_1 + 3 * x_6 + x_{11} + x_{16}$).

As described above, the encryption device 10 may perform an improved shift-row operation and a mix-column operation. The encryption device 10 may first perform a first arithmetic operation based on the substitution data received from the first substitution circuit S1. The encryption device 10 may then perform a second arithmetic operation based on the substitution data received from the second substitution circuit S2 and a result of the first arithmetic operation. Accordingly, an overall execution time of the encryption device 10 may be reduced.

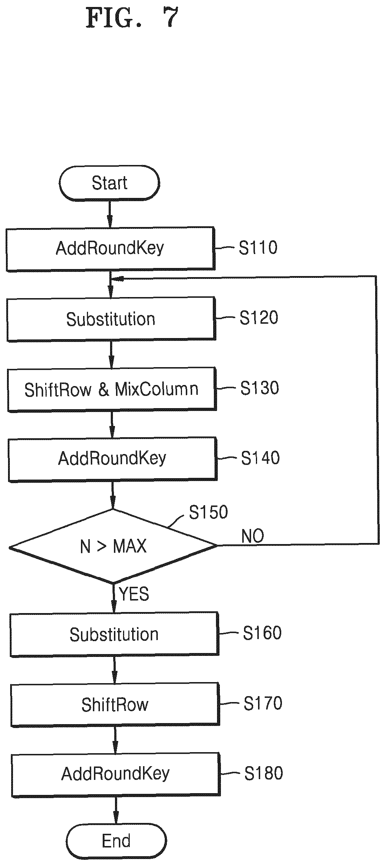

FIG. 7 is a flowchart illustrating an operating method of an encryption device according to an embodiment.

Referring to FIG. 7, at operation S110, the encryption device 10 may perform a round key addition operation. Here, operation S110 may correspond to the first round operation (illustrated as "AddRoundKey"). At operation S120, the encryption device 10 may perform a substitution operation. The first substitution circuits S1 and the second substitution circuits S2 may perform a substitution operation. The first substitution circuit S1 may perform a substitution operation during a first time period. The second substitution circuit S2 may perform a substitution operation for a second time period that is longer than the first time period.

At operation S130, the encryption device 10 may perform a shift row operation (illustrated as "ShiftRow") and a mix column operation (illustrated as "MixColumn"). The SR and MC circuit 120 may perform the first arithmetic operation. Thereafter, the SR and MC circuit 120 may perform a second arithmetic operation. Although operation S120 is illustrated as being performed before operation S130, embodiments are not limited thereto, and the operations may be performed simultaneously or in a reversed order. For example, while the second substitution circuit S2 generates the substitution data, the SR and MC circuit 120 may simultaneously perform the first arithmetic operation.

At operation S140, the encryption device 10 may perform a round key addition operation. Here, operations S120 to S140 may correspond to repeated round operations. Therefore, at operation S150, it may be determined whether the number of repetitions N exceeds a preset or predetermined reference number MAX. If it is determined that the number of repetitions N does not exceed the preset or predetermined reference number, the process may return to operation S120 and the repeated round operation may be performed again. If it is determined that the number of repetitions N exceeds the preset or predetermined reference number MAX, the repeated round operation may be terminated and operation S160 may be performed.

At operation S160, the encryption device 10 may perform a substitution operation. At operation S170, the encryption device 10 may perform a shift row operation. At operation S180, the encryption device 10 may perform a round key addition operation. Here, operations S160 to S180 may correspond to the final round operation. In this manner, encrypted final output data may be generated as a result of the final round operation.

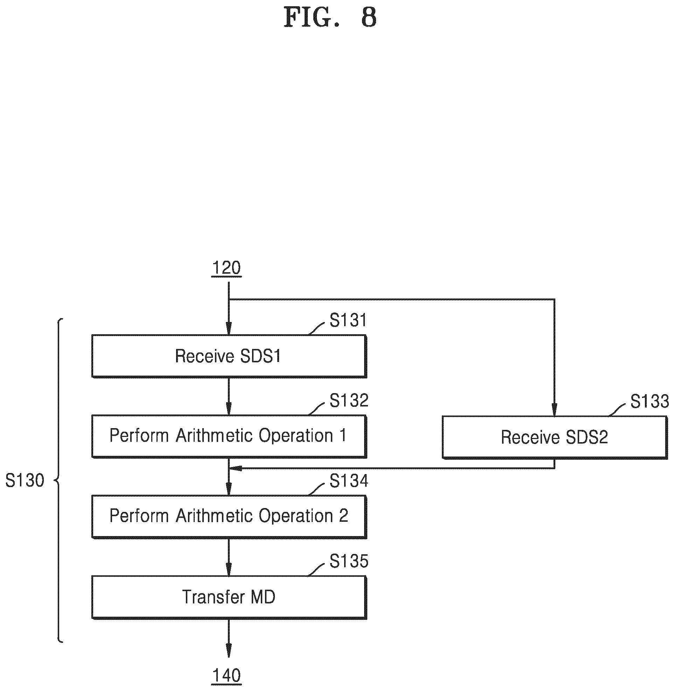

FIG. 8 is a flowchart illustrating operation S130 of FIG. 7 in detail.

Referring to FIGS. 2, 7, and 8, at operation S131, the SR and MC circuit 120 may receive the first substitution data set SDS1. The first substitution data set SDS1 may include substitution data output from the first substitution circuit S1. While the second substitution circuits S2 of the substitution cluster circuit 110 perform the substitution operation, the SR and MC circuit 120 may receive the first substitution data set SDS1.

At operation S132, the SR and MC circuit 120 may perform a first arithmetic operation. The first arithmetic circuit 121 may perform the first arithmetic operation based on the first substitution data set SDS1. The first arithmetic circuit 121 may perform the first arithmetic operation to generate the first intermediate data set IMD1. The first arithmetic circuit 121 may transmit the first intermediate data set IMD1 to the second arithmetic circuit 122.

At operation S133, the SR and MC circuit 120 may receive the second substitution data set SDS2. The second substitution data set SDS2 may include substitution data output from the second substitution circuit S2. The SR and MC circuit 120 may receive the second substitution data set SDS2, while performing the first arithmetic operation or after performing the first arithmetic operation.

At operation S134, the SR and MC circuit 120 may perform a second arithmetic operation. The second arithmetic circuit 122 may perform the second arithmetic operation based on the first intermediate data set IMD1 and the second substitution data set SDS2. The second arithmetic circuit 122 may perform the second arithmetic operation to generate the mixed data MD. At operation S135, the SR and MC circuit 120 may transmit the mixed data MD to the round key addition arithmetic circuit 130.

The shift-row operation and the mix-column operation may include a plurality of arithmetic sub-operations. The order in which the sub-operations are performed may be determined in advance. For example, an arithmetic operation for the first substitution data set SDS1 may be included in the first arithmetic operation, and an arithmetic operation for the second substitution data set SDS2 may be included in the second arithmetic operation. The SR and MC circuit 120 may perform the arithmetic sub-operations in a determined execution order.

The first arithmetic operation may include arithmetic sub-operations for only the first substitution data set SDS1 among the arithmetic sub-operations. For example, the arithmetic sub-operations may be classified into a first arithmetic operation and a second arithmetic operation. The first arithmetic operation may be an arithmetic sub-operation that does not use substitution data included in the second substitution data set SDS2. The second arithmetic operation may include arithmetic sub-operations excluding arithmetic sub-operations included in the first arithmetic operation among the arithmetic sub-operations. The second arithmetic operation may be an arithmetic sub-operation that uses substitution data included in the second substitution data set SDS2.

Before the second substitution data set SDS2 generated by the second substitution circuits S2 having a long propagation delay, the SR and MC circuit 120 may first perform a plurality of arithmetic sub-operations (e.g., the first arithmetic operation) that are capable of being performed using only the first substitution data set SDS1 among the arithmetic sub-operations. After receiving the second substitution data set SDS2, the SR and MC circuit 120 may perform the other arithmetic sub-operations (e.g., the second arithmetic operation). Accordingly, the encryption device 10 may not wait until the second substitution data set SDS2 is generated. The encryption device 10 may first perform the first arithmetic operation on the first generated the first substitution data set SDS1, thereby preventing the overall execution time from increasing. For example, the overall execution time or propagation delay of the encryption device 10 may be reduced.

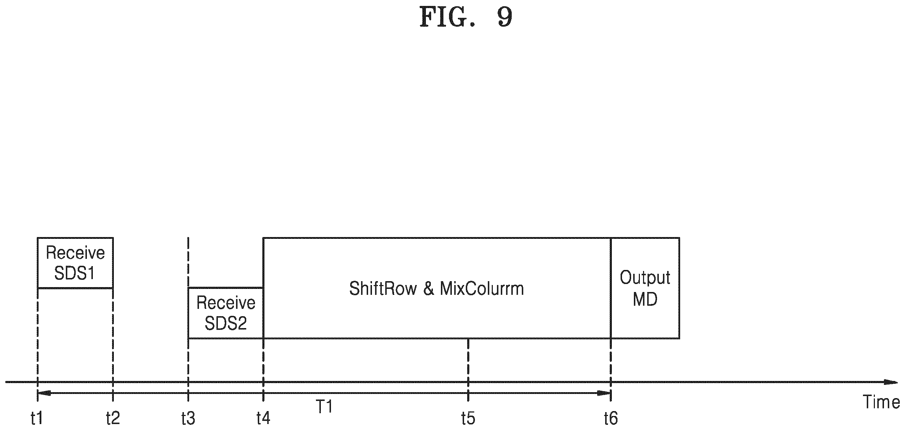

FIG. 9 is a timing diagram illustrating an operation of the SR and MC circuit 120.

Referring to FIG. 9, a process in which the propagation delay increases when the SR and MC circuit 120 does not perform the improved shift-row and mix-column operation is described. At the first time point t1, the SR and MC circuit 120 may receive the first substitution data set SDS1. Thereafter, at the third time point t3, the SR and MC circuit 120 may receive the second substitution data set SDS2. The SR and MC circuit 120 may not perform any arithmetic operation until the second substitution data set SDS2 is received. The SR and MC circuit 120 may wait until the second substitution data set SDS2 is received after receiving the first substitution data set SDS1.

At a fourth time point t4, the SR and MC circuit 120 may perform a shift row operation and a mix column operation. The SR and MC circuit 120 may perform the second arithmetic operation to generate the mixed data MD. At the sixth time point t6, the SR and MC circuit 120 may output the mixed data MD. The SR and MC circuit 120 may output the mixed data MD after the lapse of a first time T1 from a time point (e.g., the first time point t1) at which the first substitution data set SDS1 was received.

Accordingly, the execution time of the encryption operation may be determined by the propagation delay of the second substitution circuit S2. Using the substitution circuits, the encryption device 10 may reduce the gate count and power consumption. However, because the propagation delay of the second substitution circuit S2 may increase, the overall propagation delay of the encryption device 10 may increase.

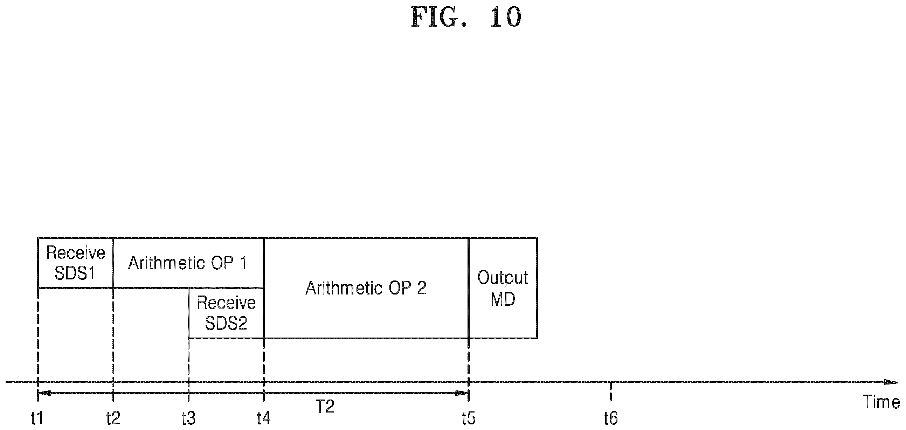

FIG. 10 is a timing diagram illustrating the operation of the SR and MC circuit 120 of FIG. 2.

The SR and MC circuit 120 may perform an improved shift-row operation and mix-column operation. For example, the SR and MC circuit 120 may perform an adaptive shift-row operation and mix-column operation. In order to reduce the overall execution time, the SR and MC circuit 120 may first perform an arithmetic operation on the substitution data output from the first substitution circuit S1.

The improved shift-row operation and mix-column operation may refer to an arithmetic operation performed using data first output from the substitution cluster circuit 110. For example, the improved shift-row operation and mix-column operation may refer to an operation in which arithmetic sub-operations are classified into a first arithmetic operation and a second arithmetic operation, the first arithmetic operation is performed in advance before the second substitution data set SDS2 is received, and the second arithmetic operation is performed after the second substitution data set SDS2 is received.

At the first time point t1, the SR and MC circuit 120 may receive the first substitution data set SDS1. Thereafter, at the second time point t2, the SR and MC circuit 120 may perform the first arithmetic operation based on the first substitution data set SDS1. Thereafter, at the third time point t3, the SR and MC circuit 120 may receive the second substitution data set SDS2. The SR and MC circuit 120 may receive the second substitution data set SDS2, while performing the first arithmetic operation. Alternatively, the SR and MC circuit 120 may receive the second substitution data set SDS2 after performing the first arithmetic operation.

At a fourth time point t4, the SR and MC circuit 120 may perform the second arithmetic operation. The SR and MC circuit 120 may perform the second arithmetic operation to generate the mixed data MD. At the fifth time point t5, the SR and MC circuit 120 may output the mixed data MD. The SR and MC circuit 120 may output the mixed data MD after the lapse of a second time T2 from a time point (e.g., the first time point t1) at which the first substitution data set SDS1 was received. The second time T2 may be shorter than the first time T1.

Referring to FIG. 9, the SR and MC circuit 120 may perform a shift row operation and a mix column operation after receiving the substitution data output from the second substitution circuit S2. Accordingly, the overall execution time of the encryption device 10 may increase. In contrast, the SR and MC circuit 120 according to the embodiment may perform an improved shift-row operation and a mix-column operation. The SR and MC circuit 120 may perform the first arithmetic operation from the second time point t2, thereby reducing the operation execution time. The SR and MC circuit 120 may reduce the overall execution time by performing the first arithmetic operation based on the substitution data of the first substitution circuit S1 before outputting the substitution data of the second substitution circuit S2.

As described above, the substitution cluster circuit 110 may include both the first substitution circuit S1 and the second substitution circuit S2. The SR and MC circuit 120 may perform an improved shift-row operation and mix-column operation. Accordingly, the encryption device 10 may reduce power consumption, while maintaining the gate count. The encryption device 10 may minimize timing loss due to the second substitution circuit S2. The encryption device 10 may improve performance.

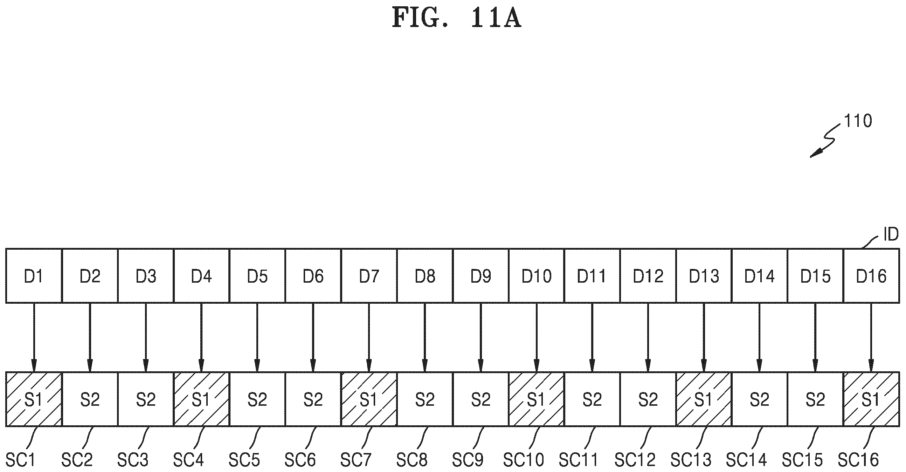

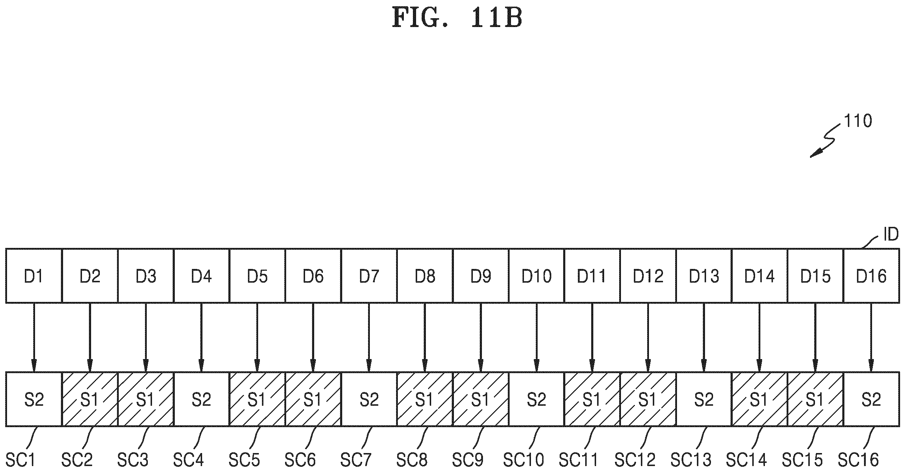

FIGS. 11A and 11B are block diagrams illustrating the substitution cluster circuit 110 of FIG. 2 in detail.

Referring to FIGS. 2, 3, 11A, and 11B, the substitution cluster circuit 110 may include the first to sixteenth sub-circuits SC1 to SC16. The substitution cluster circuit 110 may receive the input data ID. The input data ID may include the first to sixteenth sub-data D1 to D16. For example, the first sub-circuit SC1 may receive the first sub-data D1. The first sub-circuit SC1 may perform a substitution operation on the first sub-data D1 to generate the first substitution data X1. The first sub-circuit SC1 may output first substitution data X1. The other sub-circuits SC2 to SC16 are the same or similar, so a detailed description thereof is omitted.

The configuration of the substitution cluster circuit 110 may be changed depending on target specifications. The ratio of the number of first substitution circuits S1 to the number of second substitution circuits S2 included in the substitution cluster circuit 110 may be changed. The ratio of the number of first substitution circuits S1 to the number of second substitution circuits S2 included in the substitution cluster circuit 110 may be N:M. Here, N and M may be natural numbers. The number of first substitution circuits S1 and the number of second substitution circuits S2 may be adjusted. Depending on the target power consumption and gate count, the desired performance of the encryption device 10 may be satisfied by adjusting the ratio of the first substitution circuit S1 and the second substitution circuit S2.

In an embodiment, referring to FIG. 3, the substitution cluster circuit 110 may include eight first substitution circuits S1 and eight second substitution circuits S2. The number of first substitution circuits S1 included in the substitution cluster circuit 110 may be equal to the number of second substitution circuits S2. However, embodiments are not limited thereto, and the number of first substitution circuits S1 included in the substitution cluster circuit 110 may be different from the number of second substitution circuits S2. The ratio of the number of first substitution circuits S1 to the number of second substitution circuits S2 included in the substitution cluster circuit 110 may be 1:1. For example, N may be '1' and M may be '1'.

In an embodiment, referring to FIG. 11A, the substitution cluster circuit 110 may include six first substitution circuits S1 and ten second substitution circuits S2. For example, the first sub-circuit SC1 may be a first substitution circuit S1, the second sub-circuit SC2 may be a second substitution circuit S2, the third sub-circuit SC3 may be a second substitution circuit S2, the fourth sub-circuit SC4 may be a first substitution circuit S1, the fifth sub-circuit SC5 may be a second substitution circuit S2, the sixth sub-circuit SC6 may be a second substitution circuit S2, the seventh sub-circuit SC7 may be a first substitution circuit S1, the eighth sub-circuit SC8 may be a second substitution circuit S2, the ninth sub-circuit SC9 may be a second substitution circuit S2, the tenth sub-circuit SC10 may be a first substitution circuit S1, the eleventh sub-circuit SC11 may be a second substitution circuit S2, the twelfth sub-circuit SC12 may be a second substitution circuit S2, the thirteenth sub-circuit SC13 may be a first substitution circuit S1, the fourteenth sub-circuit SC14 may be a second substitution circuit S2, the fifteenth sub-circuit SC15 may be a second substitution circuit S2, and the sixteenth sub-circuit SC16 may be a first substitution circuit S1.

The ratio of the number of first substitution circuits S1 to the number of second substitution circuits S2 included in the substitution cluster circuit 110 may be '6:10'. For example, N may be '6' and M may be '10'. However, embodiments are not limited thereto, and the ratio of the number of first substitution circuits S1 to the number of second substitution circuits S2 may be changed depending on an implementation.

For example, even if the propagation delay of the encryption device 10 increases, the number of second substitution circuits S2 included in the substitution cluster circuit 110 may be greater than the number of first substitution circuits S1 in order to reduce the gate count and reduce power consumption.

In an embodiment, referring to FIG. 11B, the substitution cluster circuit 110 may include ten first substitution circuits and six second substitution circuits. For example, the first sub-circuit SC1 may be a second substitution circuit S2, the second sub-circuit SC2 may be a first substitution circuit S1, the third sub-circuit SC3 may be a first substitution circuit S1, the fourth sub-circuit SC4 may be a second substitution circuit S2, the fifth sub-circuit SC5 may be a first substitution circuit S1, the sixth sub-circuit SC6 may be a first substitution circuit S1, the seventh sub-circuit SC7 may be a second substitution circuit S2, the eighth sub-circuit SC8 may be a first substitution circuit S1, the ninth sub-circuit SC9 may be a first substitution circuit S1, the tenth sub-circuit SC10 may be a second substitution circuit S2, the eleventh sub-circuit SC11 may be a first substitution circuit S1, the twelfth sub-circuit SC12 may be a first substitution circuit S1, the thirteenth sub-circuit SC13 may be a second substitution circuit S2, the fourteenth sub-circuit SC14 may be a first substitution circuit S1, the fifteenth sub-circuit SC15 may be a first substitution circuit S1, and the sixteenth sub-circuit SC16 may be a second substitution circuit S2.

The ratio of the number of first substitution circuits and the number of second substitution circuits included in the substitution cluster circuit 110 may be '10:6'. For example, N may be '10' and M may be '6'. However, embodiments are not limited thereto, and the ratio of the number of first substitution circuits and the number of second substitution circuits may be changed depending on an implementation.

For example, even if the gate count of the encryption device 10 increases and power consumption increases, the number of second substitution circuits S2 included in the substitution cluster circuit 110 may be less than the number of first substitution circuits S1 in order to reduce the propagation delay.

As described above, the encryption device 10 according to an embodiment may satisfy the target specification by adjusting the ratio of the first substitution circuits S1 to the second substitution circuits S2 included in the substitution cluster circuit 110.

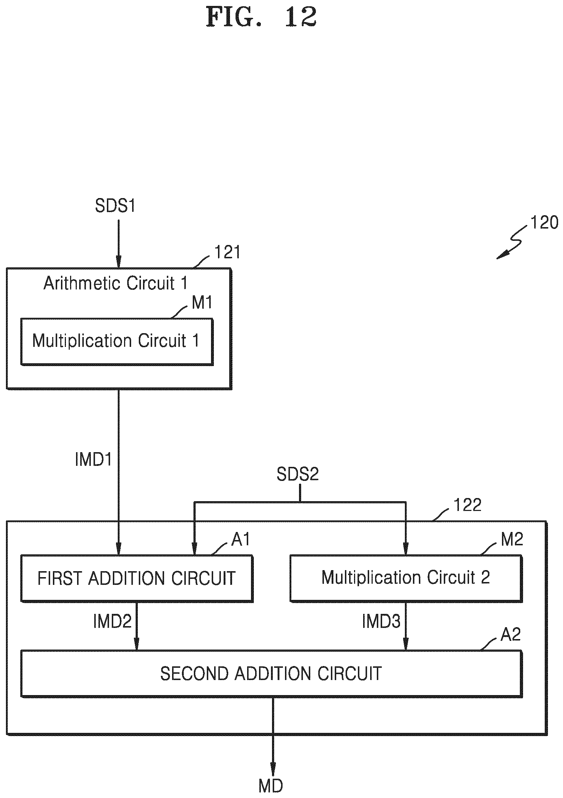

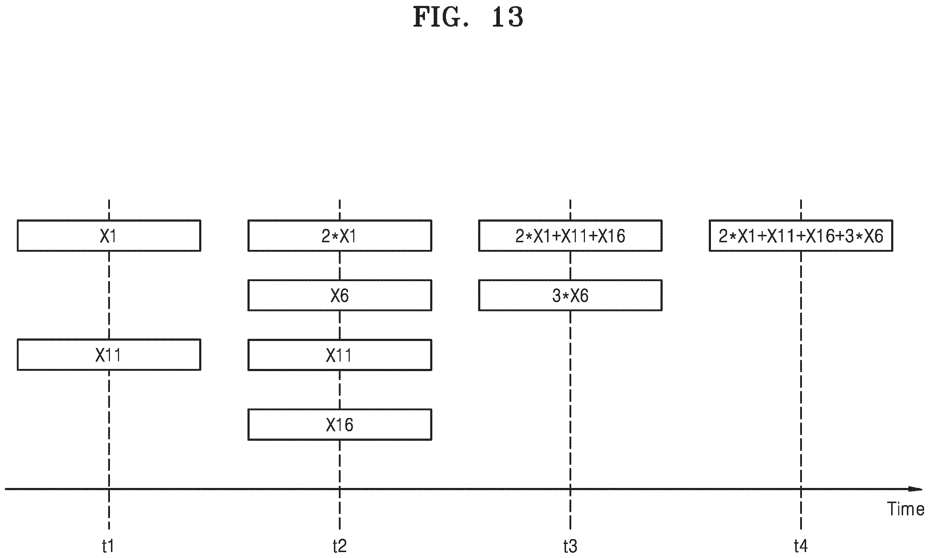

FIG. 12 is a block diagram illustrating the SR and MC circuit 120 of FIG. 2 in detail. FIG. 13 is a timing diagram illustrating an operation of the SR and MC circuit of FIG. 2.

Referring to FIGS. 2, 12, and 13, the SR and MC circuit 120 may include the first arithmetic circuit 121 and the second arithmetic circuit 122. The SR and MC circuit 120 may receive the first substitution data set SDS1 and the second substitution data set SDS2. The first substitution data set SDS1 may include the first substitution data X1 and the eleventh substitution data X11. The second substitution data set SDS2 may include the sixth substitution data X6 and the sixteenth substitution data X16. The SR and MC circuit 120 may perform a shift row operation and a mix column operation based on the first substitution data set SDS1 and the second substitution data set SDS2 to generate mixed data MD. The SR and MC circuit 120 may output the mixed data MD. Hereinafter, a method of generating the first mixed sub-data MSD1 is described.

In an embodiment, the first arithmetic circuit 121 may include the first multiplication circuit M1. The first multiplication circuit M1 may receive the first substitution data set SDS1. The first multiplication circuit M1 may perform a multiplication operation based on the first substitution data set SDS1. For example, the first multiplication circuit M1 may perform a multiplication operation on some pieces of substitution data included in the first substitution data set SDS1 to generate the first intermediate data set IMD1. The first multiplication circuit M1 may output the first intermediate data set IMD1 to the second arithmetic circuit 122.

The first intermediate data set IMD1 may include output data from the first multiplication circuit M1 and the first substitution data set SDS1. In an embodiment, the first intermediate data set IMD1 may include all of the substitution data included in the first substitution data set SDS1. In an embodiment, the first intermediate data set IMD1 may include some of the substitution data included in the first substitution data set SDS1.

At the first time point t1, the first arithmetic circuit 121 may receive the first substitution data set SDS1. The first arithmetic circuit 121 may receive the first substitution data X1 and the eleventh substitution data X11. The first multiplication circuit M1 may perform a multiplication operation on the first substitution data X1 of the first substitution data set SDS1. The first multiplication circuit M1 may perform a multiplication operation on the first substitution data X1 and a value '2' of the corresponding element of the matrix M to generate the first result value R1 (e.g., , $2 * x_1$). The first multiplication circuit M1 may provide the first intermediate data set IMD1 including the first result value R1 e.g., , $2 * x_1$) to the second arithmetic circuit 122. The first intermediate data set IMD1 may also include an eleventh substitution data X11.

The second arithmetic circuit 122 may receive the first intermediate data set IMD1 and the second substitution data set SDS2. For example, at the second time point t2, the second arithmetic circuit 122 may receive the first result value R1 (e.g., $2 * x_1$), the eleventh substitution data X11, the sixth substitution data X6, and the sixteenth substitution data X16.

The second arithmetic circuit 122 may include the first addition circuit A1, the second multiplication circuit M2, and the second addition circuit A2. The first addition circuit A1 may receive the first intermediate data set IMD1 and the second substitution data set SDS2. The first addition circuit A1 may perform an addition operation based on the first intermediate data set IMD1 and the second substitution data set SDS2. The first addition circuit A1 may perform an addition operation to generate the second intermediate data set IMD2. The first addition circuit A1 may output the second intermediate data set IMD2 to the second addition circuit A2.

The first addition circuit A1 may perform an addition operation on the first result value R1 (e.g., , $2 * x_1$) of the first intermediate data set IMD1, the eleventh substitution data X11 of the first substitution data set SDS1, and the sixteenth substitution data X16 of the second substitution data set SDS2 to calculate the second intermediate data set IMD2. The first addition circuit A1 may perform an addition operation to generate a second result value R2 (e.g., $2 * x_1 + x_{11} + x_{16}$). The first addition circuit A1 may provide the second intermediate data set IMD2 including the second result value R2 (e.g., $2 * x_1 + x_{11} + x_{16}$) to the second addition circuit A2.

The second multiplication circuit M2 may receive the second substitution data set SDS2. The second multiplication circuit M2 may perform a multiplication operation based on the second substitution data set SDS2. For example, the second multiplication circuit M2 may perform a multiplication operation on some pieces of the substitution data included in the second substitution data set SDS2 to generate a third intermediate data set IMD3. The second multiplication circuit M2 may output the third intermediate data set IMD3 to the second addition circuit A2.

The second multiplication circuit M2 may perform a multiplication operation on the sixth substitution data X6 of the second substitution data set SDS2. The second multiplication circuit M2 may perform a multiplication operation on the sixth substitution data X6 and the value '3' of the corresponding element of the matrix M to generate a third result value R3 (e.g., $3 * x_6$). The second multiplication circuit M2 may provide the third intermediate data set IMD3 including the third result value R3 to the second addition circuit A2.

The second addition circuit A2 may receive the second intermediate data set IMD2 and the third intermediate data set IMD3. For example, at the third time point t3, the second addition circuit A2 may receive the second result value R2 (e.g., $2 * x_1 + x_{11} + x_{16}$), and the third result value R3 (e.g., $3 * x_6$). The second addition circuit A2 may perform an addition operation based on the second intermediate data set IMD2 and the third intermediate data set IMD3. The second addition circuit A2 may perform an addition operation to generate mixed data MD. The second addition circuit A2 may output the mixed data MD.

The second addition circuit A2 may perform an addition operation on the second result value R2 (e.g., $2 * x_1 + x_{11} + x_{16}$) of the second intermediate data set IMD2 and the third result value R3 (e.g., $3 * x_6$) of the third intermediate data set IMD3 to calculate the first mixed sub-data MSD1. The second addition circuit A2 may perform an addition operation to generate the first mixed sub-data MSD1 (e.g., $2 * x_1 + 3 * x_6 + x_{11} + x_{16}$). The second addition circuit A2 may output the mixed data MD including the first mixed sub-data MSD1 (e.g., $2 * x_1 + 3 * x_6 + x_{11} + x_{16}$). For example, at fourth time point t4, the second addition circuit A2 may output the first mixed sub-data MSD1 (e.g., $2 * x_1 + 3 * x_6 + x_{11} + x_{16}$).

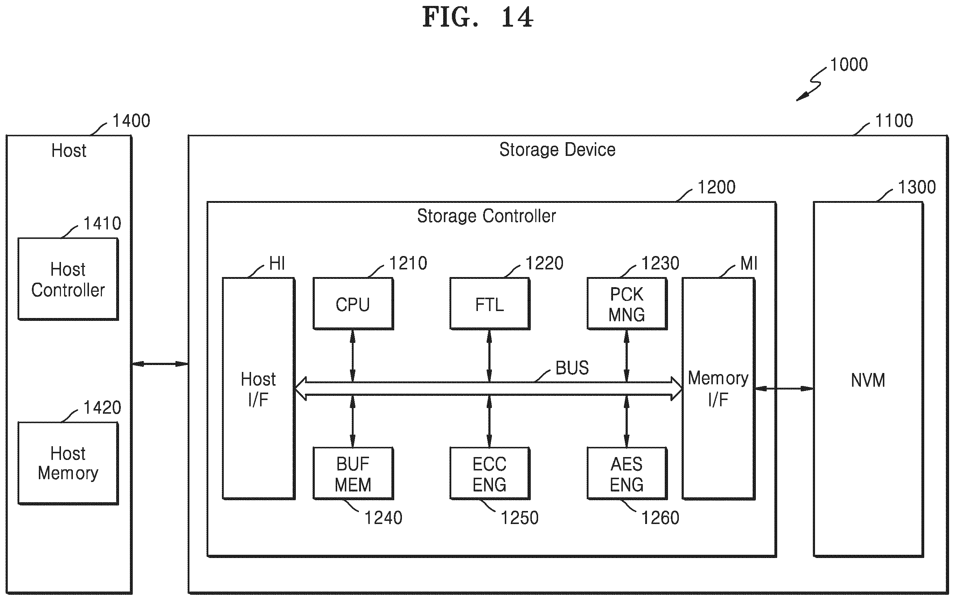

FIG. 14 is a block diagram illustrating a storage system 1000 according to an embodiment.

Referring to FIG. 14, the storage system 1000 may include a host device (1400 (which may be referred to as a "host") and a storage device 1100. In addition, the storage device 1100 may include a storage controller 1200 and a non-volatile memory (NVM) device 1300. In addition, according to an embodiment, the host device 1400 may include a host controller 1410 and host memory 1420. The host memory 1420 may function as a buffer memory for temporarily storing data to be transmitted to the storage device 1100 or data transmitted from the storage device 1100.

The storage device 1100 may include storage mediums for storing data upon request from the host device 1400. For example, the storage device 1100 may include at least one of a solid state drive (SSD), an embedded memory, and a removable external memory. If the storage device 1100 is an SSD, the storage device 1100 may be a device that follows the non-volatile memory express (NVMe) standard. If the storage device 1100 is an embedded memory or an external memory, the storage device 1100 may be a device that follows the universal flash storage (UFS) or embedded multi-media card (eMMC) standard. The host device 1400 and the storage device 1100 may each generate packets according to an adopted standard protocol and transmit the generated packets.

When the NVM device 1300 of the storage device 1100 includes flash memory, the flash memory may include a two-dimensional (2D) NAND memory array or a three-dimensional (3D) (or vertical) NAND (VNAND) memory array. As another example, the storage device 1100 may include various other types of non-volatile memories. For example, the storage device 1100 include magnetoresistive random access memory (MRAM), spin-transfer torque MRAM, conductive bridging RAM (CBRAM), ferroelectric RAM (FeRAM), phase RAM (PRAM), resistive RAM, and various other types of memories.

In an embodiment, the host controller 1410 and host memory 1420 may be implemented as separate semiconductor chips. Alternatively, in some embodiments, the host controller 1410 and host memory 1420 may be integrated into the same semiconductor chip. As an example, the host controller 1410 may be one of a plurality of modules provided in an application processor, and the application processor may be implemented as a system on chip (SoC). In addition, the host memory 1420 may be an embedded memory provided within the application processor or may be an NVM or memory module located outside the application processor.

The host controller 1410 may manage an operation of storing data (e.g., write data) of a buffer region to the NVM device 1300 or storing data (e.g., read data) of the NVM device 1300 to the buffer region.

The storage controller 1200 may include a host interface circuit (HI), a memory interface circuit (MI), and a central processing unit (CPU) 1210. In addition, the storage controller 1200 may further include a flash translation layer (FTL) 1220, a packet manager 1230 (illustrated as "PCK MNG"), a buffer memory 1240 (illustrated as "BUF MEM"), an error correction code (ECC) engine 1250 (illustrated as "ECC ENG"), and an advanced encryption standard engine 1260 (illustrated as "AES ENG"). The storage controller 1200 may further include a working memory into which the FTL 1220 may be loaded, and data writing and reading operations for NVM may be controlled by the CPU 1210 executing the FTL 1220.

The HI may transmit and receive packets to and from the host device 1400. A packet transmitted from the host device 1400 to the HI may include a command or data to be written to the NVM device 1300, and a packet transmitted from the HI to the host device 1400 may include a response to a command or data read from the NVM device 1300. The MI may transmit data to be written to the NVM device 1300 to the NVM device 1300 or receive data read from the NVM device 1300. The MI may be implemented to comply with standard protocols, such as Toggle or Open NAND Flash Interface (ONFI).

The FTL 1220 may perform several functions, such as address mapping, wear-leveling, and garbage collection. The address mapping operation is an operation that changes a logical address received from the host device 1400 into a physical address used to actually store data in the NVM device 1300. Wear-leveling may refer to a technology for preventing excessive deterioration of a specific block by ensuring that blocks within the NVM device 1300 are used uniformly and may be implemented, for example, through firmware technology that balances erase counts of physical blocks. Garbage collection may refer to a technology for securing available capacity within the NVM device 1300 by copying valid data of a block to a new block and then erasing the existing block.

The PCK MNG 1230 may generate a packet according to a protocol of an interface agreed upon with the host device 1400 or parse various types of information from a packet received from the host device 1400. In addition, the buffer memory 1240 may temporarily store data to be written to the NVM device 1300 or data to be read from the NVM device 1300. The buffer memory 1240 may be a component provided within the storage controller 1200 but may also be located outside the storage controller 1200.

The ECC ENG 1250 may perform error detection and correction functions on read data read from the NVM device 1300. The ECC ENG 1250 may perform an error detection operation and an error correction operation. The ECC ENG 1250 may perform an error detection operation to determine whether data includes an error. The ECC ENG 1250 may perform an error detection operation to determine the number of error bits (NEB) of data.

In detail, the ECC ENG 1250 may generate parity bits for write data to be written to the NVM device 1300, and the generated parity bits may be stored in the NVM device 1300 together with the write data. When reading data from the NVM device 1300, the ECC ENG 1250 may correct an error in the read data using parity bits read from the NVM device 1300 together with the read data and output error-corrected read data.

In an embodiment, the ECC ENG 1250 may perform an error detection operation or an error correction operation using one of a cyclic redundancy check (CRC) (e.g., CRC-16, CRC-32, CRC-64, CRC-128, CRC-256, etc.), hamming code, low density parity check (LDPC), a Bose-Chaudhuri-Hocquenghem code (BCH code), Reed-Solomon code (RS code), a Viterbi code, and a Turbo code.

As the target performance of the storage device 1100 increases, the number of cores of the AES ENG 1260 may increase. As the number of cores of the AES ENG 1260 has increased, the proportion of gate count of the AES ENG 1260 within the storage controller 1200 has increased. There is demand to reduce the gate count of the AES ENG 1260 and reduce power consumption. In the AES ENG 1260, the substitution circuit has a large proportion, and by reducing the gate count of the substitution circuit, the gate count and power consumption of the AES ENG 1260 may be reduced.

The AES ENG 1260 may perform at least one of an encryption operation and a decryption operation on data input to the storage controller 1200 using a symmetric key algorithm. The AES ENG 1260 may be the encryption device 10 of FIG. 1. The AES ENG 1260 may perform an encryption operation based on the method described above with reference to FIGS. 1 to 12. The AES ENG 1260 may include a plurality of types of substitution circuits. The AES ENG 1260 may perform improved (or adaptive) shift-row operation and mix-column operation. Accordingly, it is possible to prevent the propagation delay of the storage controller 1200 from increasing, reduce the gate count, and reduce power consumption.

As described above, the storage device 1100 may include the NVM device 1300 and the storage controller 1200 that controls the NVM device 1300. The storage controller 1200 may include the AES ENG 1260, e.g., an encryption device, that performs an encryption operation on data received from the host device 1400, generates output data, and transmits the output data to the NVM device 1300.

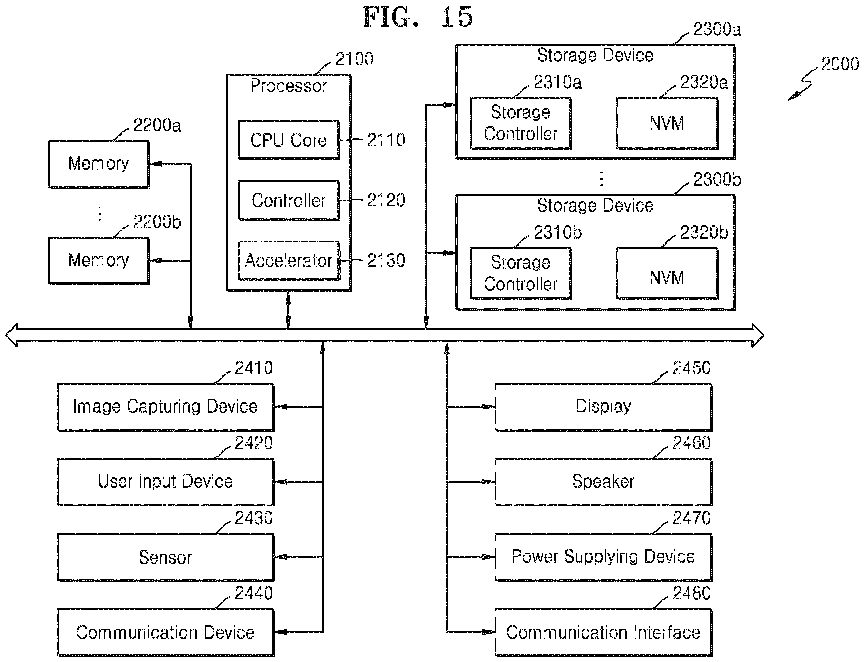

FIG. 15 is a diagram illustrating a system 2000 to which a memory device according to an embodiment is applied.

The system 2000 of FIG. 15 may be a mobile system, such as a mobile phone, a smartphone, a tablet personal computer, a wearable device, a healthcare device, or an internet of things (IoT) device. However, the system 2000 of FIG. 15 is not necessarily limited to the mobile system and may be a personal computer, a laptop computer, a server, a media player, or an automotive device, such as a navigation system.

Referring to FIG. 15, the system 2000 may include a main processor (or a processor) 2100, memories 2200a and 2200b, and storage devices 2300a and 2300b and may further include one or more of an image capturing device 2410, a user input device 2420, a sensor 2430, a communication device 2440, a display 2450, a speaker 2460, a power supply device 2470, and a communication interface 2480.

The main processor 2100 may control the overall operation of the system 2000, e.g., the operation of other components constituting the system 2000. The main processor 2100 may be implemented as a general-purpose processor, a dedicated processor, or an application processor.

The main processor 2100 may include one or more CPU cores 2110 and may further include a controller 2120 for controlling the memories 2200a and 2200b and/or the storage devices 2300a and 2300b. According to an embodiment, the main processor 2100 may further include an accelerator 2130, which is a dedicated circuit for high-speed data operations, such as artificial intelligence (AI) data operations. The accelerator 2130 may include a graphics processing unit (GPU), a neural processing unit (NPU), and/or a data processing unit (DPU) and may be implemented as a separate chip that is physically independent from other components of the main processor 2100.

The memories 2200a and 2200b may be used as a main memory device of the system 2000 and may include volatile memory, such as SRAM and/or DRAM, but may also include NVM, such as flash memory, PRAM and/or RRAM. The memories 2200a and 2200b may also be implemented within the same package as the main processor 2100.

The storage devices 2300a and 2300b may function as a non-volatile storage device that stores data regardless of whether power is supplied and may have a relatively large storage capacity compared to the memories 2200a and 2200b. The storage devices 2300a and 2300b may include storage controllers 2310a and 2310b and NVMs 2320a and 2320b that store data under control by the storage controllers 2310a and 2310b, respectively. The NVMs 2320a and 2320b may include flash memory of a 2D structure or a 3D V-NAND structure but may also include other types of nonvolatile memories, such as PRAM and/or RRAM.

The storage devices 2300a and 2300b may be included in the system 2000 and physically separated from the main processor 2100 or may be implemented within the same package as the main processor 2100. In addition, the storage devices 2300a and 2300b may have a form, such as a solid state drive (SSD) or a memory card, and may be detachably coupled to other components of the system 2000 through an interface, such as the communication interface 2480 to be described below. The storage devices 2300a and 2300b may be devices to which standard protocols, such as universal flash storage (UFS), embedded multi-media card (eMMC) or NVMe, are applied, but are not necessarily limited thereto.

The image capturing device 2410 may capture still or moving images and may be a camera, a camcorder, and/or a webcam. The user input device 2420 may receive various types of data input from a user of the system 2000 and may be a touch pad, a keyboard, a mouse, and/or a microphone.

The sensor 2430 may detect various types of physical quantities that may be obtained from the outside of the system 2000 and convert the detected physical quantities into electrical signals. The sensors 2430 may include temperature sensors, pressure sensors, light sensors, position sensors, acceleration sensors, biosensors, and/or gyroscope sensors.

The communication device 2440 may transmit and receive signals to and from other devices outside the system 2000 according to various communication protocols. The communication device 2440 may be implemented to include an antenna, a transceiver, and/or a modem. The display 2450 and the speaker 2460 may function as output devices that output visual information and auditory information, respectively, to the user of the system 2000. The power supply device 2470 may appropriately convert power supplied from a battery (not shown) built into the system 2000 and/or an external power source and supply the same to each component of the system 2000.

The communication interface 2480 may provide a connection between the system 2000 and an external device that is connected to the system 2000 and may exchange data with the system 2000. The communication interface 2480 may be implemented in various interface methods, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, universal serial bus (USB), secure digital (SD) card, multi-media card (MMC), eMMC, universal flash storage (UFS), embedded UFS (eUFS), compact flash (CF) card interface, etc.

In an embodiment, the storage devices 2300a and 2300b may include the encryption device as described above with reference to FIGS. 1 to 14. The storage devices 2300a and 2300b may perform cryptographic operations as described above with reference to FIGS. 1 to 13. Accordingly, the storage devices 2300a and 2300b may minimize propagation delay and reduce power consumption without increasing the gate count.

## Claims

1. An encryption device (10) for performing a cryptographic operation on input data (ID) to generate output data, the encryption device (10) comprising:

   a substitution cluster circuit (110) configured to perform a substitution operation on the input data (ID), wherein the substitution cluster circuit (110) comprises a plurality of first substitution circuits (S1) and a plurality of second substitution circuits (S2);
   a shift-row and mix-column circuit (120) configured to:

   receive a first substitution data set (SDS1) from the plurality of first substitution circuits (S1),
   receive a second substitution data set (SDS2) from the plurality of second substitution circuits (S2), and
   perform a shift-row operation and a mix-column operation on the first substitution data set (SDS1) and the second substitution data set (SDS2) to generate mixed data (MD); and

   a round key addition circuit (130) configured to perform a round key addition operation on the mixed data (MD) to generate the output data,
   wherein an execution time of each first substitution circuit of the plurality of first substitution circuits (S1) is shorter than an execution time of each second substitution circuit of the plurality of second substitution circuits (S2), and
   wherein the shift-row and mix-column circuit (120) comprises:

   a first arithmetic circuit (121) configured to perform a first arithmetic operation on the first substitution data set (SDS1) to generate a first intermediate data set (IMD1); and
   a second arithmetic circuit (122) configured to perform a second arithmetic operation on the first intermediate data set (IMD1) and the second substitution data set (SDS2) to generate the mixed data (MD).

2. The encryption device (10) of claim 1, wherein the first arithmetic operation is performed before the second substitution data set (SDS2) is received.

3. The encryption device (10) of claim 1 or 2, wherein a gate count of each of the first substitution circuit of the plurality of first substitution circuits (S1) is greater than a gate count of each of the second substitution circuit of the plurality of second substitution circuits (S2).

4. The encryption device (10) of any one of claims 1 to 3, wherein a power consumption of each first substitution circuit of the plurality of first substitution circuits (S1) is greater than a power consumption of each second substitution circuit of the plurality of second substitution circuits (S2).

5. The encryption device (10) of any one of claims 1 to 4, wherein the substitution cluster circuit (110) is further configured to transmit the first substitution data set (SDS1) to the shift-row and mix-column circuit (120), and to subsequently transmit the second substitution data set (SDS2) to the shift-row and mix-column circuit (120).

6. The encryption device (10) of any one of claims 1 to 5, wherein the shift-row operation and the mix-column operation comprise a first plurality of arithmetic sub-operations and a second plurality of arithmetic sub-operations,

wherein the first plurality of arithmetic sub-operations correspond to substitution data included in the first substitution data set (SDS1),
wherein the first arithmetic operation comprises the first plurality of arithmetic sub-operations, and
wherein the second arithmetic operation comprises the second plurality of arithmetic sub-operations.

7. The encryption device (10) of any one of claims 1 to 6, wherein the input data (ID) comprises first data (D1), second data (D2), third data (D15), and fourth data (D16),

wherein a first sub-circuit (SC1) among the plurality of first substitution circuits (S1) is configured to receive the first data (D1) and perform a first substitution operation on the first data (D1) to generate first substitution data (X1),
wherein a second sub-circuit (SC2) among the plurality of second substitution circuits (S2) is configured to receive the second data (D2) and perform a second substitution operation on the second data (D2) to generate second substitution data (X2),
wherein a third sub-circuit (SC15) among the plurality of first substitution circuits (S1) is configured to receive the third data (D15) and perform a third substitution operation on the third data (D15) to generate third substitution data (X15),
wherein a fourth sub-circuit (SC16) among the plurality of second substitution circuits (S2) is configured to receive the fourth data (D16) and perform a fourth substitution operation on the fourth data (D16) to generate fourth substitution data (X16),
wherein the first substitution data set (SDS1) comprises the first substitution data (X1) and the third substitution data (X15), and
wherein the second substitution data set (SDS2) comprises the second substitution data (X2) and the fourth substitution data (X16).

8. The encryption device (10) of any one of claims 1 to 7, wherein the first arithmetic circuit (121) comprises:

a multiplication circuit (M1) configured to receive the first substitution data set (SDS1), perform a multiplication operation on the first substitution data set (SDS1), and output the first intermediate data set (IMD1) or a second intermediate data set (IMD2); and/or
an addition circuit (A1) configured to perform an addition operation based on the second intermediate data set (IMD2) and the first substitution data set (SDS1) and generate the first intermediate data set (IMD1).

9. The encryption device (10) of any one of claims 1 to 8, wherein the second arithmetic circuit (122) comprises:

a first addition circuit (A2) configured to perform an addition operation based on the first intermediate data set (IMD1) and the second substitution data set (SDS2), generate a third intermediate data set (IMD2; IMD3), and output the third intermediate data set (IMD2; IMD3);
a multiplication circuit (M2) configured to perform a multiplication operation based on the second substitution data set (SDS2), generate a fourth intermediate data set (IMD3; IMD4), and output the fourth intermediate data set (IMD3; IMD4); and
a second addition circuit (A3) configured to perform an addition operation based on the third intermediate data set (IMD2; IMD3) and the fourth intermediate data set (IMD3; IMD4), generate a mixed data (MD) set, and output the mixed data (MD) set.

10. The encryption device (10) of any one of claims 1 to 9, wherein a ratio of a number of the plurality of first substitution circuits (S1) to a number of the plurality of second substitution circuits (S2) is N:M, where N and M are natural numbers.

11. An operating method of an encryption device (10) for performing an encryption operation on input data (ID) to generate output data, the operating method comprising:

Performing (S120), by a plurality of first substitution circuits (S1) and a plurality of second substitution circuits (S2), a substitution operation on the input data (ID);

receiving (S131), by a shift-row and mix-column circuit (120), a first substitution data set (SDS1) from the plurality of first substitution circuits (S1);

performing (S132), by the shift-row and mix-column circuit (120), a first arithmetic operation based on the first substitution data set (SDS1);

receiving (S133), by the shift-row and mix-column circuit (120), a second substitution data set (SDS2) from the plurality of second substitution circuits (S2);

performing (S134), by the shift-row and mix-column circuit (120), a second arithmetic operation based on a first intermediate data set (IMD1) and the second substitution data set (SDS2), wherein the first intermediate data set (IMD1) is a result of the first arithmetic operation; and

performing (S140), by a round key addition circuit (130), a round key addition operation on mixed data (MD) to generate the output data, wherein the mixed data (MD) is a result of the second arithmetic operation.

12. The operating method of claim 11, wherein an execution time of each first substitution circuit of the plurality of first substitution circuits (S1) is shorter than an execution time of each second substitution circuit of the plurality of second substitution circuits (S2).

13. The operating method of claim 11 or 12, wherein the first arithmetic operation comprises a first plurality of arithmetic sub-operations corresponding to substitution data included in the first substitution data set (SDS1), and wherein the second arithmetic operation comprises a second plurality of arithmetic sub-operations.

14. The operating method of any one of claims 11 to 13, wherein the first arithmetic operation is performed before the second substitution data set (SDS2) is received.

15. The operating method of any one of claims 11 to 14, wherein the performing a second arithmetic operation comprises:

performing an addition operation based on the first intermediate data set (IMD1) and the second substitution data set (SDS2), to generate a third intermediate data set (IMD2; IMD3), and to output the third intermediate data set (IMD2; IMD3);

performing a multiplication operation based on the second substitution data set (SDS2), to generate a fourth intermediate data set (IMD3; IMD4), and to output the fourth intermediate data set (IMD3; IMD4); and

performing an addition operation based on the third intermediate data set (IMD2; IMD3) and the fourth intermediate data set (IMD3; IMD4), to generate a mixed data (MD) set, and to output the mixed data (MD) set.

# FIG. 1

10

```
┌─────────────────────────────────────────┐
│          Encryption Device               │
│                              ╱ 100        │
│   ┌──────────────────────────────────┐   │
│   │        Encryption Core           │   │
│   │  ┌────────────────────────────┐  │   │
│   │  │   Substitution 1 (S1)      │  │   │
│   │  ├────────────────────────────┤  │   │
│   │  │   Substitution 2 (S2)      │  │   │
│   │  └────────────────────────────┘  │   │
│   └──────────────────────────────────┘   │
│                              ╱ 11         │
│   ┌──────────────────────────────────┐   │
│   │     Encryption Controller        │   │
│   └──────────────────────────────────┘   │
└─────────────────────────────────────────┘
```

# FIG. 2

100

Encryption Core

Substitution Cluster Circuit 110

SR and MC Circuit 120

ADD Round Key Circuit 130

# FIG. 3

SC1 SC2 SC15 SC16

| D1 | D2 | . . . | D15 | D16 |

Substitution 1 (S1) — X1
Substitution 2 (S2) — X2
. . .
Substitution 1 (S1) — X15
Substitution 2 (S2) — X16

110

ID

SDS1

[X1, X3, X5, X7, X9, X11, X13, X15]

SDS2

[X2, X4. X6, X8, X10, X12, X14, X16]

EP 4 668 667 A1

# FIG. 4

# FIG. 5

SDS1

120

Arithmetic Circuit 1 — 121

Multiplication Circuit 1 — M1

IMD2

ADD Circuit 1 — A1

IMD1

SDS2

122

ADD Circuit 2 — A2

Multiplication Circuit 2 — M2

IMD3

IMD4

ADD CIRCUIT 3 — A3

MD

FIG. 6

## FIG. 7

```
                    ┌──────────┐
                    │  Start   │
                    └────┬─────┘
                         ↓
        ┌────────────────────────────┐
        │       AddRoundKey          │──S110
        └──────────────┬─────────────┘
                       ↓ ←──────────────────────┐
        ┌────────────────────────────┐          │
        │       Substitution         │──S120     │
        └──────────────┬─────────────┘          │
                       ↓                        │
        ┌────────────────────────────┐          │
        │    ShiftRow & MixColumn     │──S130    │
        └──────────────┬─────────────┘          │
                       ↓                        │
        ┌────────────────────────────┐          │
        │       AddRoundKey          │──S140     │
        └──────────────┬─────────────┘          │
                       ↓          S150           │
                      ╱─╲                        │
                    ╱     ╲          NO          │
                  ╱  N > MAX ╲──────────────────┘
                    ╲     ╱
                      ╲─╱
                       │ YES
                       ↓
        ┌────────────────────────────┐
        │       Substitution         │──S160
        └──────────────┬─────────────┘
                       ↓
        ┌────────────────────────────┐
        │         ShiftRow           │──S170
        └──────────────┬─────────────┘
                       ↓
        ┌────────────────────────────┐
        │       AddRoundKey          │──S180
        └──────────────┬─────────────┘
                       ↓
                  ┌────────┐
                  │  End   │
                  └────────┘
```

24

# FIG. 8

<u>120</u>

S131

Receive SDS1

S132

Perform Arithmetic Operation 1

S133

Receive SDS2

S134

Perform Arithmetic Operation 2

S130

S135

Transfer MD

<u>140</u>

FIG. 9

# FIG. 10

**FIG. 11A**

# FIG. 11B

EP 4 668 667 A1

# FIG. 12

SDS1

→ 120

Arithmetic Circuit 1 — 121

M1

Multiplication Circuit 1

IMD1

SDS2

— 122

A1

FIRST ADDITION CIRCUIT

M2

Multiplication Circuit 2

IMD2

IMD3

A2

SECOND ADDITION CIRCUIT

MD

## FIG. 13

| | X1 | | 2*X1 | | 2*X1+X11+X16 | | 2*X1+X11+X16+3*X6 |

Boxes:
- t1: X1, X11
- t2: 2*X1, X6, X11, X16
- t3: 2*X1+X11+X16, 3*X6
- t4: 2*X1+X11+X16+3*X6

Time axis: t1, t2, t3, t4

# FIG. 14

EP 4 668 667 A1

# FIG. 15

Europäisches
Patentamt

European
Patent Office

Office européen
des brevets

## EUROPEAN SEARCH REPORT

**Application Number**

EP 25 17 5947

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YICHENG C ET AL: "Energy-efficient and security-optimized AES hardware design for ubiquitous computing", CHINESE JOURNAL OF SYSTEMS ENGINEERING AND ELECTRONICS, SECOND ACADEMY MINISTRY OF AERO-SPACE INDUSTRY, BEIJING, CN, vol. 19, no. 4, 1 August 2008 (2008-08-01), pages 652-658, XP024341408, ISSN: 1004-4132, DOI: 10.1016/S1004-4132(08)60134-6 [retrieved on 2008-08-01] * Abstract, sections 2, 4.1, 4.3 Table 1 * ----- | 1-15 | INV. H04L9/00 H04L9/06 |
| X | JAE SEONG LEE ET AL: "S-box hiding methods for AES hardware chips against differential power analysis based on composite field", NETWORK INFRASTRUCTURE AND DIGITAL CONTENT, 2010 2ND IEEE INTERNATIONAL CONFERENCE ON, IEEE, PISCATAWAY, NJ, USA, 24 September 2010 (2010-09-24), pages 778-782, XP031818216, ISBN: 978-1-4244-6851-5 * Abstract, sections 2.2, 3-5 * ----- | 1-15 | |
| X | Gruber Michael: "aes.vhdl", , 31 January 2022 (2022-01-31), XP093324161, Retrieved from the Internet: URL:https://gitlab.lrz.de/tueisec/tofu/-/blob/master/example-aes-vhdl/aes-vhdl/aes.vhdl | 11,13-15 | TECHNICAL FIELDS SEARCHED (IPC) H04L |
| A | * the whole document * ----- -/-- | 1-10,12 | |

The present search report has been drawn up for all claims

| Place of search | Date of completion of the search | Examiner |
|---|---|---|
| Munich | 10 October 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 17 5947

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/192973 A1 (SHIRAI TAIZO [JP] ET AL) 10 July 2014 (2014-07-10)<br>* paragraph [0006] *<br>* paragraph [0021] - paragraph [0032] *<br>* paragraph [0034] *<br>* paragraph [0041] *<br>* paragraph [0046] *<br>* paragraph [0050] *<br>* paragraph [0066] - paragraph [0067] *<br>* paragraph [0085] *<br>* paragraph [0316] - paragraph [0332] *<br>----- | 1-15 | |
| X | "The 128-bit Blockcipher CLEFIA Design Rationale, Revision 1.0",<br>INTERNET CITATION,<br>1 June 2007 (2007-06-01), XP003020655,<br>Retrieved from the Internet:<br>URL:http://www.sony.net/Products/clefia/technical/index.html<br>[retrieved on 2008-01-01]<br>* section 2.5, section 2.5.4 *<br>----- | 1-15 | |
| X | US 2003/223580 A1 (SNELL DORIAN L [US])<br>4 December 2003 (2003-12-04)<br>* paragraph [0002] *<br>* paragraph [0007] *<br>* paragraph [0012] *<br>* paragraph [0030] - paragraph [0031] *<br>* paragraph [0084] *<br>-----<br>-/-- | 1-15 | |

TECHNICAL FIELDS
SEARCHED (IPC)

The present search report has been drawn up for all claims

| Place of search | Date of completion of the search | Examiner |
|---|---|---|
| Munich | 10 October 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 17 5947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRIYA S SRIDEVI SATHYA ET AL: "FPGA implementation of AES algorithm for high speed applications", ANALOG INTEGRATED CIRCUITS AND SIGNAL PROCESSING, SPRINGER NEW YORK LLC, US, vol. 112, no. 1, 16 November 2021 (2021-11-16), pages 115-125, XP037861003, ISSN: 0925-1030, DOI: 10.1007/S10470-021-01959-Z [retrieved on 2021-11-16] * section 4 * ----- | 1-15 | |

TECHNICAL FIELDS
SEARCHED        (IPC)

The present search report has been drawn up for all claims

| Place of search | Date of completion of the search | Examiner |
|---|---|---|
| Munich | 10 October 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5947

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | Publication date | Patent family member(s) | Publication date |
|---|---|---|---|
| US 2014192973 A1 | 10-07-2014 | CN 101536062 A | 16-09-2009 |
| | | CN 102594545 A | 18-07-2012 |
| | | EP 2058781 A1 | 13-05-2009 |
| | | JP 5050454 B2 | 17-10-2012 |
| | | JP 2008058828 A | 13-03-2008 |
| | | RU 2009107223 A | 10-09-2010 |
| | | RU 2011149646 A | 20-06-2013 |
| | | TW 200830232 A | 16-07-2008 |
| | | TW 201044334 A | 16-12-2010 |
| | | US 2010104093 A1 | 29-04-2010 |
| | | US 2014192973 A1 | 10-07-2014 |
| | | WO 2008026622 A1 | 06-03-2008 |
| US 2003223580 A1 | 04-12-2003 | AU 2003241594 A1 | 12-12-2003 |
| | | CA 2486713 A1 | 04-12-2003 |
| | | CN 1672352 A | 21-09-2005 |
| | | EP 1510028 A1 | 02-03-2005 |
| | | JP 2005527853 A | 15-09-2005 |
| | | US 2003223580 A1 | 04-12-2003 |
| | | WO 03101020 A1 | 04-12-2003 |

EPO FORM P0459

For more details about this annex : see Official Journal of the European Patent Office, No. 12/82